# FASCICULE DE BREVET EUROPEEN

(11) **EP 4 165 285 B1**
(45) Date de publication et mention de la délivrance du brevet: **12.06.2024**
(21) Numéro de dépôt: 21734423.3
(22) Date de dépôt: 01.06.2021
(51) Int. Cl.: F01D 1/24, F02C 3/067, F02C 7/06, F02K 3/072, F01D 25/16

(54) **ARCHITECTURE AMELIOREE DE TURBOMACHINE A TURBINE CONTRAROTATIVE**
VERBESSERTE ARCHITEKTUR EINER TURBOMASCHINE MIT GEGENLÄUFIGER TURBINE
IMPROVED ARCHITECTURE OF A TURBOMACHNE WITH COUNTER-ROTATING TURBINE

(30) Priorité: 10.06.2020 FR 2006063
(43) Date de publication de la demande: 19.04.2023
(73) Titulaire: SAFRAN AIRCRAFT ENGINES, 75015 Paris (FR)
(72) Inventeur: FORMICA, Olivier, 77550 MOISSY-CRAMAYEL (FR); TRUCO, Romain, 77550 MOISSY-CRAMAYEL (FR); LEVISSE, Paul, Ghislain, Albert, 77550 MOISSY-CRAMAYEL (FR)
(74) Mandataire: Cabinet Beau de Loménie
(86) Numéro de dépôt international: PCT/FR2021/050986
(87) Numéro de publication internationale: WO 2021/250336

(56) Documents cités:
- EP-A1- 1 655 475
- US-A1- 2006 093 464
- US-A1- 2010 205 934

## Description

### Domaine Technique

Le présent exposé concerne le domaine des turbomachines. Plus précisément, le présent exposé concerne une turbine contra rotative de turbomachine, et une turbomachine comprenant une telle turbine.

### Technique antérieure

Une turbomachine d'aéronef comprend généralement, d'amont en aval dans le sens d'écoulement des gaz, une soufflante, un compresseur basse pression, un compresseur haute pression, une chambre de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

Afin d'améliorer le rendement du moteur, les turbomachines d'aéronef peuvent être équipées d'une turbine contra rotative, à la place de la turbine basse pression. La turbine contrarotative comprend un rotor interne, dit rotor rapide, relié à un premier arbre de turbine, et configuré pour tourner dans un premier sens de rotation, et un rotor externe, dit rotor lent, relié à un second arbre de turbine, et configuré pour tourner dans un deuxième sens de rotation, opposé au premier sens de rotation. Les aubes du premier rotor sont intercalées avec les aubes du deuxième rotor.

De manière connue, le premier arbre de turbine est notamment centré et guidé par un palier monté entre le premier arbre et un carter de turbine amont (ou carter « TVF » pour « turbine vane frame » en anglais), disposé en amont de la turbine contrarotative, et le deuxième arbre de turbine est centré et guidé par un autre palier monté entre le deuxième arbre et un carter de turbine aval (ou carter « TRF » pour « turbine rear frame » en anglais), disposé en aval de la turbine contra rotative.

Néanmoins, cette architecture présente certains inconvénients. Notamment, la position du palier guidant le deuxième arbre oblige ce dernier à être très long, et est donc soumis à des efforts de flexion importants. Or, une flexion importante du deuxième arbre par rapport au premier arbre peut engendrer l'apparition de jeux entre les rotors, ou la modification de jeux déjà existants. En particulier, le premier et le deuxième arbres peuvent posséder leur premier mode de flexion dans la plage de fonctionnement, ce qui peut poser problème d'un point de vue dimensionnement mécanique des arbres, et créer des consommations de jeux importantes entre les deux rotors, impactant les performances, voire engendrer des contacts inter-arbres en cas de réponse trop importante sur ce mode.

Par ailleurs, les paliers des premier et deuxième arbres étant portés par des structures différentes (carter amont pour le premier arbre et carter aval pour le deuxième arbre), les déformations locales de ces carters, causées par des dilatations ou des distorsions, engendrent des déplacements différents de ces arbres, et donc l'apparition de jeux entre différentes portions des rotors. Par exemple, des déplacements relatifs entre le premier et le deuxième rotor peuvent entraîner l'apparition d'un jeu entre les aubes du premier rotor et la piste abradable du deuxième rotor. De tels jeux, provoqués par des déformations différentielles des rotors, peuvent entraîner des fuites qui nuisent aux performances de la turbomachine.

De plus, les architectures connues de ces turbines contra rotatives impliquent un confinement rotor externe dans un carter extérieur, et donc des températures importantes de ce dernier. En effet, la présence d'un tel carter extérieur est nécessaire pour porter à la fois le carter amont et le carter aval de la turbine, et ainsi assurer le lien structural entre le carter amont et le carter aval. Le fait que ce rotor externe soit confiné dans un carter extérieur limite la possibilité d'installer un dispositif de refroidissement pour ce rotor, ou d'installer des moyens de mesures pour les aubes, tels que des endoscopes. Un exemple de turbine contra rotative est divulgué dans la demande de brevet US-2006/093464.

Il existe donc un besoin pour une architecture de turbine contra rotative permettant de palier au moins en partie les inconvénients ci-dessus.

### Exposé de l'invention

Le présent exposé concerne une turbine contrarotative de turbomachine s'étendant autour d'un axe de rotation et comprenant :
- un rotor interne configuré pour tourner autour de l'axe de rotation, et comprenant au moins une aube mobile interne supportée en rotation par un premier arbre,
- un rotor externe configuré pour tourner autour de l'axe de rotation dans un sens opposé au rotor interne, et comprenant au moins une aube mobile externe supportée en rotation par un deuxième arbre coaxial au premier arbre, les premier et deuxième arbres s'étendant axialement de l'amont vers l'aval de la turbine,
dans lequel le premier arbre est guidé en rotation par un premier palier disposé entre le premier arbre et un carter amont de la turbine, et le deuxième arbre est guidé en rotation par un deuxième palier disposé entre le deuxième arbre et ledit carter amont de la turbine, le premier palier et le deuxième palier étant disposés en amont d'un premier étage du rotor interne.

Dans le présent exposé, les termes « interne » et « externe », et les termes « intérieur » et « extérieur » et leurs dérivés sont considérés selon la direction radiale de la turbine. De même, les termes « amont » et « aval » sont considérés selon le sens normal d'écoulement des gaz dans la turbomachine, le long de l'axe de rotation.

Le premier et le deuxième arbre peuvent être tubulaires, et sont coaxiaux, en s'entendant le long de l'axe de rotation. Par « disposé entre le premier arbre et un carter amont de la turbine», on comprend que le premier palier, et donc le premier arbre, sont portés par le carter amont de la turbine, une extrémité externe, ou bague externe, du premier palier étant fixée au carter amont de la turbine, une extrémité interne, ou bague interne, du premier palier étant fixée au premier arbre.

Par « disposé entre le deuxième arbre et ledit carter amont de la turbine», on comprend que le deuxième palier, et donc le deuxième arbre, sont portés, éventuellement indirectement, par le carter amont de la turbine. En d'autres termes, les efforts exercés par le deuxième arbre, par exemple les efforts de flexion, sont transmis au carter amont de la turbine, sans que l'extrémité externe, ou bague externe du deuxième palier soit nécessairement en contact direct avec le carter amont de la turbine. Par « éventuellement indirectement », on comprend qu'un autre élément peut être intercalé entre le carter amont de la turbine et le deuxième palier, cet élément pouvant être par exemple le premier arbre et le premier palier. En outre, l'extrémité interne, ou bague interne du deuxième palier est fixée au deuxième arbre.

Ainsi, le premier et le deuxième paliers sont tous deux portés in fine par le même carter, c'est-à-dire par le carter amont de la turbine. Par conséquent, les déformations dues par exemple à une dilatation du carter amont de la turbine au cours du fonctionnement de la turbine, sont transmises à chacun des deux paliers conjointement, de telle sorte que ces derniers se déplaceront simultanément l'un et l'autre. L'absence de déplacement différentiel d'un carter par rapport à un autre limite ainsi le risque d'apparition ou de modifications de jeux entre différentes portions des rotors, causés par exemple par des déplacements relatifs entre le premier et le deuxième rotor. La limitation de ces jeux provoqués par des déformations différentielles des rotors permettent ainsi de limiter le risque d'apparition de fuites, et d'améliorer le rendement et les performances et de la turbomachine.

De plus, les paliers étant tous les deux portés par le carter amont de la turbine, le carter aval généralement présent sur les turbines selon l'état de la technique, n'est plus nécessaire pour porter le deuxième palier, et peut par conséquent être supprimé. Cela permet de minimiser la masse de la turbine.

Par ailleurs, par « premier étage du rotor interne », on comprend l'étage du rotor interne disposé le plus en amont dudit rotor, selon l'axe de rotation. On comprend donc que le fait de disposer le premier palier et le deuxième palier en amont du premier étage du rotor interne signifie qu'aucune aube du rotor interne ne se trouve en amont de ces paliers. Le fait de disposer les premier et deuxième paliers en amont du rotor interne, et par conséquent également en amont du rotor externe, permet de diminuer l'entraxe du deuxième arbre, sans augmenter l'entraxe du premier arbre. On comprend par «entraxe», la distance entre le palier amont, guidant l'arbre en amont de la turbomachine, et le palier aval, c'est-à-dire le premier ou le deuxième palier, guidant l'arbre en aval de la turbomachine, au niveau de la turbine contra rotative.

En effet, il serait également possible de réduire la longueur du deuxième arbre en disposant les deux paliers au niveau d'un plan médian de la turbine, ce qui permettrait également de limiter les effets gyroscopiques et l'apparition de jeux différentiels entre les deux rotors. Cette solution imposerait cependant d'allonger l'entraxe du premier arbre. Cela engendrerait une diminution de la fréquence du premier mode de flexion de ce premier arbre, et donc une augmentation des moments de flexion ainsi qu'un risque de consommations de jeux importantes entre les deux rotors, voire des contacts inter-arbres en cas de réponse trop importante sur ce mode.

Selon le présent exposé, les premier et deuxième paliers étant situés en amont du rotor interne, il est possible d'augmenter la fréquence du premier mode de flexion du deuxième arbre, minimisant les moments de flexion dans cet arbre, sans augmenter ceux du premier arbre. Les risques de contacts inter-arbres, et les consommations de jeu dynamiques entre les deux rotors sont ainsi limités.

Par ailleurs, cette solution permet de faciliter la récupération d'huile dans le moteur. En effet, le fait de disposer les deux paliers au niveau d'un plan médian de la turbine présenterait l'inconvénient d'engendrer des angles de récupération d'huile très faibles, compte tenu du décalage des paliers vers l'aval. Il serait alors nécessaire de rajouter des pièces pour permettre la récupération de l'huile. La solution proposée dans le présent exposé permet d'assainir la lubrification et le comportement de l'enceinte. En effet, les paliers étant disposés en amont de la turbine, et donc axialement proche du carter amont de la turbine, il est possible d'obtenir des angles de récupération plus importants, et faciliter ainsi la récupération de l'huile.

Dans certains modes de réalisation, la au moins une aube mobile interne est supportée en rotation par une portion du premier arbre en porte à faux par rapport au premier palier, et la au moins une aube mobile externe est supportée en rotation par une portion du deuxième arbre en porte à faux par rapport au deuxième palier.

Par « en porte à faux », on comprend que les aubes internes sont portées par le premier arbre à une position située en aval du premier palier, et les aubes externes sont portées par le deuxième arbre à une position située en aval du deuxième palier. En d'autres termes, compte tenu du fait que les deux paliers sont portés par le carter amont de la turbine, le support des rotors interne et externe par le premier et le deuxième arbre est effectué en aval des deux paliers, selon l'axe de rotation.

Dans certains modes de réalisation, le deuxième palier est disposé entre le deuxième arbre et le premier arbre.

En d'autres termes, une extrémité externe du deuxième palier est fixée au premier arbre, et une extrémité interne du premier palier est fixée au premier arbre. Autrement dit, le premier et le deuxième palier sont disposés et fixés de part et d'autre de la paroi du premier arbre, et sont tous deux portés par le carter amont de la turbine.

Dans certains modes de réalisation, les premier et deuxième paliers sont disposés sensiblement au droit l'un de l'autre le long de l'axe de rotation.

En d'autres termes, les premier et deuxième paliers sont disposés sensiblement sur un même plan radial normal à l'axe de rotation. Ainsi, des forces de déformations provenant du carter amont de la turbine sont plus efficacement transmises du premier palier au deuxième palier, le chemin des efforts étant minimisé. Par conséquent, un déplacement, par exemple une flexion, du premier arbre engendrera un déplacement sensiblement identique du deuxième arbre. Les risques de déplacements différentiels entre le rotor interne et le rotor externe sont ainsi davantage limités.

Dans certains modes de réalisation, les premier et deuxième paliers sont disposés sensiblement au droit du carter amont de la turbine le long de l'axe de rotation.

En d'autres termes, les premier et deuxième paliers sont disposés sensiblement sur un même plan radial normal à l'axe de rotation, que le carter amont de la turbine. il est ainsi possible d'augmenter les angles de récupération de l'huile, et faciliter davantage la récupération de l'huile.

Dans certains modes de réalisation, les premier et deuxième paliers sont disposés en amont du carter amont de la turbine.

Cette configuration présente l'avantage de décaler davantage les paliers avals, c'est-à-dire les premier et deuxième paliers, vers l'amont, diminuant ainsi les entraxes, et limitant ainsi davantage les moments de flexion.

Dans certains modes de réalisation, la au moins une aube mobile interne est supportée en rotation par le premier arbre, par l'intermédiaire d'un tourillon disposé sensiblement au niveau d'un plan médian de la turbine.

Dans certains modes de réalisation, la au moins une aube mobile interne est supportée en rotation par le premier arbre, par l'intermédiaire d'un tourillon disposé plus en amont que ledit plan médian, selon l'axe de rotation.

Le plan médian, ou centre géométrique, désigne le centre, suivant l'axe de rotation, de la longueur totale de la turbine. Le tourillon, ou disque, permet d'assurer la liaison mécanique entre le premier arbre et les disques du rotor interne. Le fait de décaler ce tourillon vers l'amont de la turbine permet de réduire la longueur de la portion du premier arbre en aval du premier palier, et donc de diminuer le porte-à-faux par rapport au premier palier. Cela permet de réduire les consommations de jeu dynamiques entre les rotors interne et externe, et ainsi d'améliorer les performances de la turbine.

Dans certains modes de réalisation, la turbine comprend un carter externe entourant au moins partiellement le rotor externe, le carter externe s'étendant axialement depuis une extrémité amont de la turbine, jusqu'à une position disposée en amont d'une extrémité aval de la turbine.

Dans certains modes de réalisation, le carter externe s'étend axialement depuis l'extrémité amont de la turbine sur une longueur inférieure à 50%, de préférence inférieure à 30%, de préférence encore inférieure à 15% de la longueur de la turbine.

Compte tenu du fait que le premier et le deuxième palier sont tous les deux portés par le carter amont de la turbine, le carter aval généralement présent sur les turbines selon l'état de la technique, n'est plus nécessaire pour porter le deuxième palier, et peut par conséquent être supprimé. Il n'est, de plus, plus nécessaire non plus de disposer un carter externe, pour porter le carter aval et entourant le rotor externe sur toute la longueur de celui-ci. Ainsi, la portion aval du rotor externe n'est plus confinée. Par conséquent, un dispositif de refroidissement peut être disposé afin de refroidir directement cette portion aval, et des dispositifs de mesure tels que des endoscopes peuvent être plus aisément mis en place. Il est également possible de loger des dispositifs d'étanchéité, tels que des joints labyrinthes ou des joints radiaux segmentés, entre les rotor et stator, permettant de limiter les fuites de la turbine.

Dans certains modes de réalisation, les premier et deuxième paliers sont des roulements à billes.

Dans certains modes de réalisation, les premier et deuxième paliers sont des roulements à rouleaux. Les roulements à rouleaux permettent de contrer plus efficacement les dilatations différentielles.

Le présent exposé concerne également une turbomachine comprenant la turbine selon l'un quelconque des modes de réalisation précédents.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue générale illustrant le principe de fonctionnement d'une turbomachine à soufflantes contrarotatives selon l'état de la technique,
[Fig. 2] La figure 2 représente une vue schématique d'une turbine basse-pression selon le présent exposé,
[Fig. 3A-3B] Les figures 3A et 3B représentent des exemples modifiés de la turbine basse-pression de la figure 2.

### Description des modes de réalisation

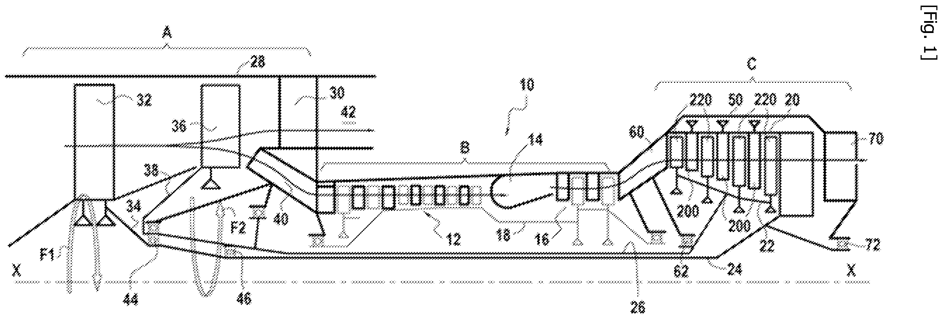

En référence à la figure 1, une turbomachine 10 à soufflantes contrarotatives comporte un axe longitudinal X-X. D'amont en aval selon le sens d'écoulement des gaz dans la turbomachine (représenté par la flèche noire), la turbomachine 10 comprend essentiellement trois parties: un module amont A (ou section de soufflante), un module intermédiaire B (ou corps haute-pression) et un module aval C (ou section de turbine basse pression).

Les trois parties A, B et C de la turbomachine sont modulaires, c'est-à-dire qu'elles forment chacune un seul ensemble et peuvent être remplacées chacune en étant séparées des autres parties de la turbomachine.

De façon bien connue en soi, le corps haute-pression B comprend un générateur de gaz pour produire des gaz de combustion. Ce générateur de gaz comprend un compresseur 12, une chambre de combustion 14 et une turbine haute-pression 16.

L'air comprimé par le compresseur 12 est mélangé au carburant dans la chambre de combustion 14 avant d'y être brûlé. Les gaz de combustion ainsi produits entraînent les aubes mobiles de la turbine haute-pression 16 qui elle-même entraîne le compresseur 12 par l'intermédiaire d'un arbre haute-pression 18. La circulation des gaz de combustion dans la turbomachine 10 se fait axialement d'amont en aval.

La section de turbine basse-pression C comprend un premier rotor annulaire, ou rotor externe 20. Ce rotor externe 20 comprend une rangée d'aubes mobiles externes de turbine 200 qui s'étendent radialement vers l'intérieur et qui sont espacées axialement les unes des autres.

La section de turbine basse-pression C comprend également un second rotor annulaire, ou rotor interne 22. Ce rotor interne 22 comprend une rangée d'aubes mobiles internes de turbine 220 qui s'étendent radialement vers l'extérieur et qui sont espacées axialement les unes des autres. Les aubes de turbine 200, 220 des rotors interne et externe 20, 22 sont disposées en alternance les unes par rapport aux autres de telle sorte que les rotors interne et externe 20, 22 sont imbriqués les uns dans les autres.

Les aubes mobiles de turbine 200 du rotor externe 20 sont supportées en rotation par un premier arbre basse-pression 24. De même, les aubes mobiles de turbine 220 du rotor interne 22 sont supportées en rotation par un second arbre basse-pression 26 disposé de façon coaxiale autour du premier arbre 24. Les arbres basse-pression 24, 26 s'étendent axialement de l'amont vers l'aval de l'axe X de la turbomachine. Les rotors interne et externe 20, 22 sont entourés par un carter externe 50.

La section de turbine basse-pression C est traversée par les gaz de combustion provenant du corps haute-pression B. Ces gaz de combustion entraînent donc en rotation les aubes de turbine 200, 220 des rotors interne et externe 20, 22 dans des sens opposés. Ainsi, les premier et second arbres basse-pression 24, 26 tournent également de façon contra rotative.

La section de soufflante A est située à l'amont de la turbomachine 10. Un capot 28 entoure de façon annulaire cette section de soufflante A. Le capot 28 est supporté par des entretoises 30 qui s'étendent radialement vers l'intérieur de la turbomachine.

La section de soufflante A comporte une première rangée d'aubes de soufflante 32 montées sur un arbre de soufflante amont 34 qui est relié à une extrémité amont du premier arbre basse-pression 24.

La section de soufflante A comporte également une seconde rangée d'aubes de soufflante 36 qui sont espacées axialement vers l'aval de la première rangée d'aubes de soufflante 32 et montées sur un arbre de soufflante arrière 38 relié à une extrémité amont du second arbre basse-pression 26.

Les première et seconde rangées d'aubes de soufflante 32, 36 tournent ainsi dans des directions opposées qui sont représentées, à titre d'exemple, par les flèches respectives F1 et F2. Cette configuration à soufflantes contra rotatives confère ainsi à la turbomachine un rendement élevé pour une consommation spécifique relativement faible.

Les aubes de soufflante 32, 36 s'étendent radialement depuis les arbres de soufflante amont 34 et aval 38 pratiquement jusqu'au capot 28. Elles sont disposées dans le passage de circulation de l'air alimentant à la fois la veine primaire 40 conduisant au compresseur 12 du corps haute pression B et la veine secondaire 42 de contournement.

Au niveau de son extrémité amont, le premier arbre basse-pression 24 supporte en rotation le second arbre basse-pression 26 par l'intermédiaire d'un premier palier à roulement 44 et d'un second palier à roulement 46 disposé en aval du premier.

Le premier palier à roulement 44 est du type à billes pour tenir aux charges axiales, tandis que le second palier à roulement 46 est du type à rouleaux pour tenir aux charges radiales de la turbomachine.

Au niveau de son extrémité aval, le premier arbre basse-pression 24 est centré et guidé par un palier 72 monté entre le premier arbre 24 et un carter aval 70 (ou carter TRF, ou carter d'échappement) de turbine. Par ailleurs, au niveau de son extrémité aval, le deuxième arbre basse-pression 26 est centré et guidé par un palier 62 monté entre le deuxième arbre 26 et un carter amont 60 (ou carter TVF, ou carter inter-turbine) de turbine. Les paliers 62 et 72 peuvent être des roulements à rouleaux ou des roulements à billes.

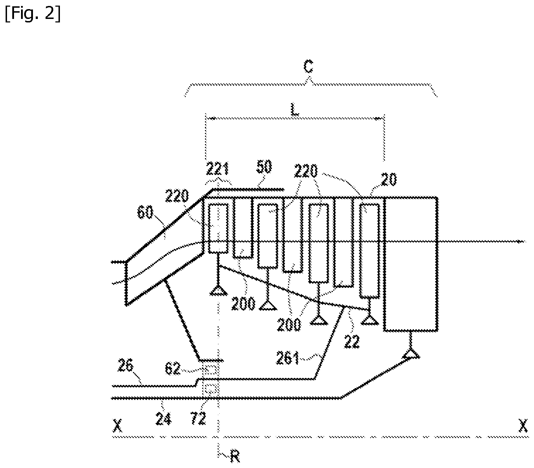

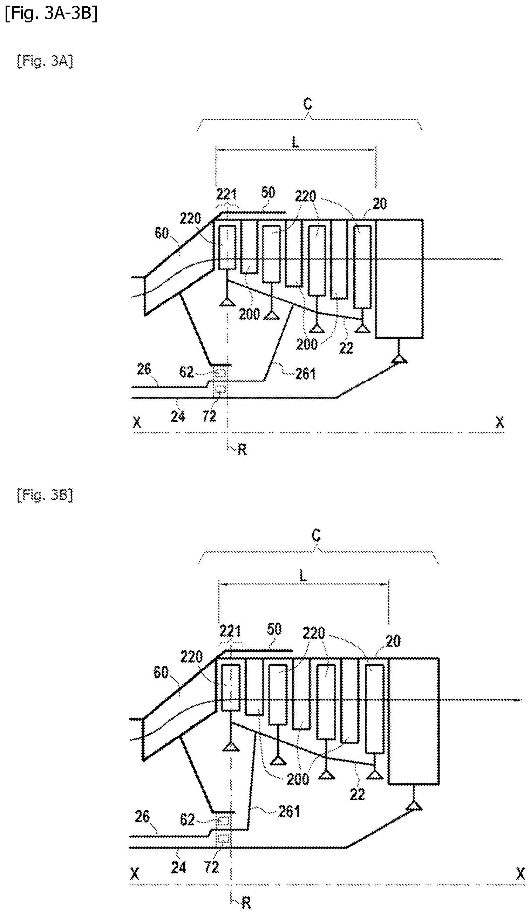

La suite de la description décrit, en référence aux figures 2, 3A et 3B, un agencement des paliers de la turbine contrarotative du présent exposé, notamment de la turbine basse pression C de la turbomachine 10. Néanmoins, ce mode de réalisation ne se limite pas à cette turbine basse pression, et peut s'adapter à d'autres éléments de la turbomachine, par exemple la turbine haute pression.

Selon ce mode de réalisation, le palier 72 du deuxième arbre basse pression 26 est déplacé axialement vers l'amont, le long de l'axe de rotation X, par rapport à sa position décrite en référence à la figure 1. Plus précisément, le palier 62 est toujours monté entre le deuxième arbre 26 et le carter amont 60 de turbine, à la même position axiale. Cependant, selon cette configuration, le palier 72 est monté entre le premier arbre 24 et le carter amont 60 de turbine également. En d'autres termes, les paliers 62 et 72 sont tous les deux portés par le même carter amont 60 de turbine.

En particulier, le palier 72 est disposé entre le premier arbre 24 et le deuxième arbre 26. Le palier 72 est donc un palier inter-arbre, dans lequel son extrémité externe est fixée au deuxième arbre 26 tournant dans un sens, et son extrémité interne est fixée au premier arbre 24 tournant dans un sens opposé au premier arbre 24.

De plus, les paliers 62 et 72 peuvent être disposés au droit l'un de l'autre, c'est-à-dire être sensiblement alignés l'un et l'autre selon une direction radiale. En d'autres termes, ils peuvent être disposés sensiblement à une même position axiale, le long de l'axe X.

Les deux paliers 62 et 72 sont disposés en amont du premier étage 221 du rotor interne 22. Plus précisément, les paliers 62 et 72 sont disposés en amont d'un plan radial R normal à l'axe de rotation X, et comprenant les aubes 220 du premier étage 221 du rotor interne 22.

Selon cette configuration, le premier arbre 24 est plus court que selon la configuration présentée en référence à la figure 1. Ainsi, les efforts de flexion auxquels le premier arbre 24 est soumis sont minimisés.

Les paliers 62 et 72 étant tous les deux portés par le carter amont 60 de turbine, le carter aval 70 n'est plus nécessaire pour porter le palier 72, et peut par conséquent être supprimé, afin de minimiser la masse de la turbine C. De même, contrairement à la turbine décrite en référence à la figure 1, le carter externe 50 ne s'étend axialement que sur une portion inférieure à 50%, de préférence inférieure à 30%, de préférence encore inférieure à 15% de la longueur L de la turbine. Ainsi, la portion aval du rotor externe 20 n'est plus confinée par le carter externe 50. Les températures atteintes par le rotor externe 20 seront donc moins importantes que dans une configuration dans laquelle ce dernier est entièrement entouré par le carter externe 50, limitant ainsi les risques de pannes. Par ailleurs, un dispositif de refroidissement (non représenté) peut être plus aisément mis en place afin de refroidir directement cette portion aval. De plus cette configuration rend le rotor externe plus accessible. Il est ainsi possible d'inspecter plus aisément ce dernier, par l'intermédiaire d'un endoscope par exemple, sans avoir à démonter le moteur.

En outre, selon le mode de réalisation illustré sur la figure 2, le tourillon 261 permettant d'assurer la liaison mécanique entre le deuxième arbre 26 et les disques du rotor interne 22 est disposé sur une portion aval du rotor interne 22. Cet exemple n'est cependant pas limitatif, d'autres configurations étant possibles.

Les figures 3A et 3B illustrent des exemples modifiés de ce mode de réalisation. Sur l'exemple de la figure 3A, le tourillon 261 est disposé au niveau d'un centre géométrique de la turbine C. Plus précisément, lorsque la turbine C s'étend axialement sur une longueur L entre l'aube située la plus en amont le long de l'axe X, et l'aube située la plus en aval, le tourillon 261 est disposé à une distance sensiblement égale à L/2 depuis l'aube 220 du premier étage 221 située la plus en amont, le long de l'axe X, c'est-à-dire l'aube du premier étage 221.

Sur l'exemple de la figure 3B, le tourillon 261 est disposé sur une portion amont du rotor interne 22, c'est-à-dire entre le plan radial R et le centre géométrique de la turbine C. Cela permet de réduire les consommations de jeu dynamiques entre les rotors interne et externe, et ainsi d'améliorer les performances de la turbine.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Turbine contra rotative (C) de turbomachine (10) s'étendant autour d'un axe de rotation (X) et comprenant :
- un rotor interne (22) configuré pour tourner autour de l'axe de rotation (X), et comprenant au moins une aube mobile interne (220) supportée en rotation par un premier arbre (26),
- un rotor externe (20) configuré pour tourner autour de l'axe de rotation (X) dans un sens opposé au rotor interne (22), et comprenant au moins une aube mobile externe (200) supportée en rotation par un deuxième arbre (24) coaxial au premier arbre (26), les premier et deuxième arbres (24, 26) s'étendant axialement de l'amont vers l'aval de la turbine (C),
dans lequel le premier arbre (26) est guidé en rotation par un premier palier (62) disposé entre le premier arbre (26) et un carter amont (60) de la turbine, et le deuxième arbre (24) est guidé en rotation par un deuxième palier (72) disposé entre le deuxième arbre (24) et le premier arbre (26), **caractérisé en ce que** le premier palier (62) et le deuxième palier (72) sont disposés sensiblement au droit l'un de l'autre le long de l'axe de rotation (X) en amont d'un premier étage du rotor interne (22).

2. Turbine (C) selon la revendication 1, dans laquelle les premier et deuxième paliers (62, 72) sont disposés sensiblement au droit du carter amont (60) de la turbine le long de l'axe de rotation (X).

3. Turbine (C) selon la revendication 1, dans laquelle les premier et deuxième paliers (62, 72) sont disposés en amont du carter amont (60) de la turbine.

4. Turbine (C) selon l'une quelconque des revendications 1 à 3, dans laquelle la au moins une aube mobile interne (220) est supportée en rotation par le premier arbre (26), par l'intermédiaire d'un tourillon (261) disposé sensiblement au niveau d'un plan médian de la turbine (C), ou plus en amont que ledit plan médian, selon l'axe de rotation (X).

5. Turbine (C) selon l'une quelconque des revendications 1 à 4, comprenant un carter externe (50) entourant au moins partiellement le rotor externe (20), le carter externe (50) s'étendant axialement depuis une extrémité amont de la turbine (C), jusqu'à une position disposée en amont d'une extrémité aval de la turbine (C).

6. Turbine (C) selon la revendication 5, dans laquelle le carter externe s'étend axialement depuis l'extrémité amont de la turbine sur une longueur inférieure à 50%, de préférence inférieure à 30%, de préférence encore inférieure à 15% de la longueur de la turbine (C).

7. Turbomachine comprenant la turbine (C) selon l'une quelconque des revendications précédentes.

## Patentansprüche

1. Gegenläufige Turbine (C) einer Turbomaschine (10), die sich um eine Drehachse (X) erstreckt und umfasst:
- einen Innenrotor (22), der dazu ausgestaltet ist, sich um die Drehachse (X) zu drehen, und mindestens eine innere Laufschaufel (220) umfasst, die drehbar durch eine erste Welle (26) gelagert ist,
- einen Außenrotor (20), der dazu ausgestaltet ist, sich um die Drehachse (X) in entgegengesetztem Sinne zu dem Innenrotor (22) zu drehen, und mindestens eine äußere Laufschaufel (200) umfasst, die drehbar durch eine zweite Welle (24) gelagert ist, die zu der ersten Welle (26) koaxial ist, wobei sich die erste und die zweite Welle (24, 26) axial von vorgelagert zu nachgelagert der Turbine (C) erstrecken,
wobei die erste Welle (26) drehbar durch ein erstes Lager (62) geführt ist, das zwischen der ersten Welle (26) und einem vorgelagerten Gehäuse (60) der Turbine angeordnet ist, und die zweite Welle (24) drehbar durch ein zweites Lager (72) geführt ist, das zwischen der zweiten Welle (24) und der ersten Welle (26) angeordnet ist, **dadurch gekennzeichnet, dass** das erste Lager (62) und das zweite Lager (72) im Wesentlichen aneinander entlang der Drehachse (X) vorgelagert zu einer ersten Stufe des Innenrotors (22) angeordnet sind.

2. Turbine (C) nach Anspruch 1, wobei das erste und das zweite Lager (62, 72) im Wesentlichen an dem vorgelagerten Gehäuse (60) der Turbine entlang der Drehachse (X) angeordnet sind.

3. Turbine (C) nach Anspruch 1, wobei das erste und das zweite Lager (62, 72) vorgelagert zu dem vorgelagerten Gehäuse (60) der Turbine angeordnet sind.

4. Turbine (C) nach einem der Ansprüche 1 bis 3, wobei die mindestens eine innere Laufschaufel (220) drehbar durch die erste Welle (26) über einen Zapfen (261) gelagert ist, der im Wesentlichen auf Höhe einer Mittenebene der Turbine (C) oder weiter vorgelagert als die Mittenebene gemäß der Drehachse (X) angeordnet ist.

5. Turbine (C) nach einem der Ansprüche 1 bis 4, umfassend ein Außengehäuse (50), das den Außenrotor (20) zumindest teilweise umgibt, wobei sich das Außengehäuse (50) axial von einem vorgelagerten Ende der Turbine (C) bis zu einer Position, die vorgelagert zu einem nachgelagerten Ende der Turbine (C) angeordnet ist, erstreckt.

6. Turbine (C) nach Anspruch 5, wobei sich das Außengehäuse axial von dem vorgelagerten Ende der Turbine über eine Länge von unter 50 %, bevorzugt unter 30 %, noch bevorzugter unter 15 % der Länge der Turbine (C) erstreckt.

7. Turbomaschine, umfassend die Turbine (C) nach einem der vorhergehenden Ansprüche.

## Claims

1. A counter-rotating turbine (C) of a turbomachine (10) extending about an axis of rotation (X) and comprising:
- an inner rotor (22) configured to rotate about the axis of rotation (X), and comprising at least one inner moving blade (220) rotatably supported by a first shaft (26),
- an outer rotor (20) configured to rotate about the axis of rotation (X) in an opposite direction to the inner rotor (22), and comprising at least one outer moving blade (200) rotatably supported by a second shaft (24) coaxial with the first shaft (26), the first and second shafts (24, 26) extending axially from upstream to downstream of the turbine (C),
wherein the first shaft (26) is guided in rotation by a first bearing (62) disposed between the first shaft (26) and an upstream casing (60) of the turbine, and the second shaft (24) is guided in rotation by a second bearing (72) disposed between the second shaft (24) and the first shaft (26), **characterized in that** the first bearing (62) and the second bearing (72) are disposed substantially in line with each other along the axis of rotation (X) upstream of a first stage of the inner rotor (22).

2. The turbine (C) according to claim 1, wherein the first and second bearings (62, 72) are disposed substantially in line with the upstream casing (60) of the turbine along the axis of rotation (X).

3. The turbine (C) according to claim 1, wherein the first and second bearings (62, 72) are disposed upstream of the upstream casing (60) of the turbine.

4. The turbine (C) according to any one of claims 1 to 3, wherein the at least one inner moving blade (220) is rotatably supported by the first shaft (26), by means of a disk (261) disposed substantially at the level of a median plane of the turbine (C), or further upstream than said median plane, according to the axis of rotation (X).

5. The turbine (C) according to any one of claims 1 to 4, comprising an outer casing (50) at least partially surrounding the outer rotor (20), the outer casing (50) extending axially from an upstream end of the turbine (C), up to a position disposed upstream of a downstream end of the turbine (C).

6. The turbine (C) according to claim 5, wherein the outer casing extends axially from the upstream end of the turbine over a length of less than 50%, preferably less than 30%, more preferably less than 15% of the length of the turbine (C).

7. A turbomachine comprising the turbine (C) according to any one of the preceding claims.
